# EUROPÄISCHE PATENTANMELDUNG

(11) **EP 0 761 728 A2**
(43) Veröffentlichungstag der Anmeldung: **12.03.1997**
(21) Anmeldenummer: 96113236.2
(22) Anmeldetag: 19.08.1996
(51) Int. Cl.: C08J 9/20, C08J 9/00

(54) **Verfahren zur Herstellung von expandierbaren Styrolpolymerisaten**

(30) Priorität: 29.08.1995 DE 19531650
(71) Anmelder: BASF AKTIENGESELLSCHAFT, 67056 Ludwigshafen (DE)
(72) Erfinder: Scherzer, Dietrich, Dr., 67433 Neustadt (DE); Witt, Michael, Dr., 67246 Dirmstein (DE); Hahn, Klaus, Dr., 67281 Kirchheim (DE); Husemann, Wolfram, Dr., 67435 Neustadt (DE); Löffler, Achim, Dr., 76137 Karlsruhe (DE); Riethues, Michael, Dr., 67071 Ludwigshafen (DE)

(57) **Zusammenfassung**

Verfahren zur Herstellung von perlförmigen expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren und unter Zusatz eines Treibmittels und 0,01 bis 1 Gew.% eines Polyolefins, welches 1 bis 20 Gew.% Carboxylgruppen enthält.

## Beschreibung

Die Erfindung betrifft ein Verfahren zur Herstellung perlförmiger expandierbarer Styrolpolymerisate (EPS) mit guter Expandierbarkeit und hoher Zellzahl durch Polymerisation von Styrol, gegebenenfalls unter Mitverwendung weiterer Comonomerer, in wäßriger Suspension in Gegewart eines Carboxylgruppen enthaltenden Polyolefins.

Schaumstoffe auf Basis von Styrolpolymerisaten haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Die Suspensionspolymerisation erfolgt hierbei in Gegenwart von Suspensionsstabilisatoren und üblicher styrollöslicher Polymerisationskatalysatoren.

Für eine technische Verwertbarkeit der so hergestellten treibmittelhaltigen EPS-Perlen ist eine wichtige Eigenschaft das Expandiervermögen, wobei hier zwischen der Expandiergeschwindigkeit und der erreichbaren minimalen Schüttdichte differenziert wird.

Zur Erzielung möglichst geringer Schüttgewichte und einer hohen Expandiergeschwindigkeit wird in der DE-A 43 08 636 vorgeschlagen, die Suspensionspolymerisation zur Herstellung von EPS in Gegenwart olefinisch ungesättigter Carbonsäuren oder deren Salzen durchzuführen. Bevorzugte ungesättigte Carbonsäuren sind Acrylsäure und Sorbinsäure. Diese sind jedoch schwierig zu handhaben. Das trifft zwar auf die in der Beschreibung erwähnte polymere Acrylsäure (Polysalz S der BASF) nicht zu. Diese ist jedoch wasserlöslich und somit schwierig in die Styrolmatrix einzubringen, und hat außerdem keinerlei keimbildende Eigenschaften.

Aufgabe der vorliegenden Erfindung war es, ein Verfahren zur Herstellung von perlförmigen, expandierbaren Styrolpolymerisaten mit verbesserter Expandierbarkeit bereitzustellen.

Darüberhinaus war es Aufgabe der Erfindung, Zusatzstoffe bereitzustellen, die eine gute Keimbildung bewirken, so daß ein EPS mit hoher Zellzahl erhalten wird, welches ein rasches Vorschäumverhalten zeigt und zu kurzen Entformzeiten führt.

Diese Aufgaben wurden erfindungsgemäß gelöst durch ein Verfahren zur Herstellung von perlförmigen, expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren unter Zusatz eines Treibmittels und 0,01 bis 1 Gew.% eines Polyolefin, welches 1 bis 20 Gew.% Carboxylgruppen enthält.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten. Im erfindungsgemäßen Verfahren kommen daher als Comonomere z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, oder auch geringe Mengen an Verbindungen, die zwei polymerisierbare Doppelbindungen enthalten, wie Butadien, Divinylbenzol oder Butandioldiacrylat.

Im erfindungsgemäßen Verfahren werden als Treibmittel, bezogen auf das Styrolpolymerisat, im allgemeinen 1 bis 10 Gew.%, vorzugsweise 3 bis 8 Gew.%, eines C₃ - bis C₇-Kohlenwasserstoffs (wie Propan, Butan, Isobutan, n-Pentan, i-Pentan, Neopentan und/oder Hexan) und/oder Kohlendioxid eingesetzt.

Bei Verwendung von Kohlendioxid als Treibmittel oder Treibmittelbestandteil kann in vorteilhafter Weise ein Kohlendioxid-Absorber gemäß der deutschen Patentanmeldung P 41 37 405.3 eingesetzt werden.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindung, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure.

Die Zusatzstoffe können je nach der beabsichtigten Wirkung in den Teilchen homogen verteilt oder als Oberflächenbeschichtung vorliegen.

Entsprechend werden die Zusatzstoffe im erfindungsgemäßen Verfahren zugegeben oder anschließend auf die erfindungsgemäß hergestellten expandierbaren Styrolpolymerisate aufgebracht.

Im erfindungsgemäßen Verfahren werden perlförmige expandierbare Styrolpolymerisate hergestellt durch Polymerisation von Styrol, ggf. zusammen mit bis zu 50 Gew.% der obengenannten Comonomeren, in wäßriger Suspension, wobei vor, während oder nach der Polymerisation die oben beschriebenen Treibmittel und gegebenenfalls übliche Zusatzstoffe in wirksamen Mengen zugesetzt werden.

Man kann die Polymerisation auch in Gegenwart eines üblichen Kettenüberträgers ausführen, der das Molekulargewicht regelt. Vorzugsweise wird tert. -Dodecylmercaptan oder DMS (dimeres α-Methylstyrol) verwendet. Der Regler wird im allgemeinen in einer Menge von 0,001 bis 0,3 Gew.%, bezogen auf Styrol, verwendet.

Das erfindungsgemäße Verfahren wird in Gegenwart eines Suspensionsstabilisators durchgeführt, z.B. Polyvinylpyrrolidon, Polyvinylalkohol und Hydroxyethylcellulose, sowie Pickering-Stabilisatoren, wie z.B. Magnesiumphosphat oder Tricalciumphosphat.

Für das erfindungsgemäße Verfahren wesentlich ist die Verwendung mindestens eines carboxylgruppenhaltigen Polymerisats in einer Menge, bezogen auf die organische Phase, von 0,01 bis 1 Gew.%, vorzugsweise von 0,02 bis 0,5 Gew.% und besonders bevorzugt 0,05 bis 0,1 Gew.%.

Das carboxylgruppenhaltige Polymerisat kann sowohl als freie Säure als auch in Form seiner wasserlöslichen Salze, insbesondere seiner Alkalisalze, eingesetzt werden.

Als carboxylgruppenhaltiges Polymerisat wird erfindungsgemäß ein Polyolefin eingesetzt, welches 1 bis 20 Gew.% Carboxylgruppen enthält. Geeignet sind z.B. Copolymerisate von Ethylen oder Propylen mit Acrylsäure, Methacrylsäure oder Crotonsäure, sowie Pfropfcopolymerisate von Acrylsäure, Methacrylsäure oder Maleinsäureanhydrid auf Polyethylen.

Bevorzugt sind wachsartige Copolymere des Ethylen, die 2 bis 15 Gew.%. Carboxylgruppen enthalten und ein Molekulargewicht von 1000 bis 50 000 aufweisen.

Das carboxylgruppenhaltige Polymerisat wird im erfindungsgemäßen Verfahren der wäßrigen Suspension vorzugsweise zugesetzt, bevor die Polymerisation einen Umsatz von 50 %, bezogen auf die Ausgangsmonomeren, erreicht hat.

Die im erfindungsgemäßen Verfahren erhaltenen perlförmigen, expandierbaren Styrolpolymerisate werden nach beendeter Polymerisation auf bekannte Weise von der wäßrigen Phase abgetrennt, gewaschen und getrocknet.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Die vorgeschäumten Teilchen können dann nach üblichen Verfahren zu Schaumstoff-Formteilen mit einer Dichte von 0,005 bis 0,1 g/cm³ ausgeschäumt werden.

Die in den Beispielen genannten Teile und Prozente beziehen sich auf das Gewicht.

### Beispiele

### Polymerisation

In einem druckfesten Rührkessel aus korrosionsfreiem Stahl wurde eine Mischung aus 150 Teilen Wasser, 0,1 Teilen Natriumpyrophosphat, 100 Teilen Styrol, 0,15 Teilen Dibenzoylperoxid, 0,25 Teilen t-Butylperbenzoat unter Rühren innerhalb von 2 h auf 85°C erhitzt. Bei Erreichen von 85°C wurden 1,5 Teile einer 10 %igen wäßrigen Lösung von Polyvinylpyrolidinon (K-Wert nach Fikentscher:90) zugegeben. Anschließend wurde die Temperatur kontinuierlich innerhalb von 4 h auf 125°C erhöht. 30 min vor Erreichen der maximalen Temperatur wurden 7 Teile Pentan in den Rührkessel dosiert. Anschließend wurde die Polymerisation während 6 h bei einer konstanten Temperatur von 125°C zu Ende geführt. Der Ansatz wurde dann abgekühlt und das Polymerisat von der wäßrigen Phase abgetrennt und gewaschen.

### Aufarbeitung

Das oberflächlich auf den Perlen anhaftende Wasser wurde durch ein 10 minütiges Absaugen auf einer Nutsche entfernt. Unmittelbar anschließend wurden die erhaltenen Perlen für 30 min in einem Warmluftstrom konditioniert und anschließend in Siebfraktionen aufgetrennt. Die mittlere Teilchengröße wurde nach Rosin-Rammler-Sperling-Bennett gemäß DIN 66 145 bestimmt.

### Beschichtung

100 Teile des expandierbaren Polystyrol-Granulates mit der Perlgrößenfraktion von 0,7 bis 1.0 mm Durchmesser wurden durch Auftrommeln im Schaufelmischer jeweils während 4 min mit 0,4 Teilen Glycerinmonostearat beschichtet.

### Vorschäumen der EPS-Perlen

Ein Teil dieser beschichteten Perlen wurde in einem diskontinuierlichen Vorschäumer, Typ Händle, mit strömendem Wasserdampf beaufschlagt. Unter standardierten Bedingungen (EPS-Einwaage 1,5 kg, Dampfdruck von 1,3 bar Überdruck) konnte das Expandierverhalten quantifiziert werden. Hierzu wurden die Schäumzeiten bis zum Erreichen von drei in unterschiedlicher Höhe angebrachten Lichtschranken bestimmt.

Mit einem Teil der beschichteten Perlen wurde in einem kontinuierlichen Vorschäumer, Typ Rauscher C69, der Produktdurchsatz bei vorgegebener Schüttdichte sowie die erreichbare minimale Schüttdichte bestimmt. Die Ergebnisse sind in der Tabelle angegeben.

**Tabelle**

| Beispiel | Carboxylgruppenhaltiges Polymerisat Teile | Zellzahl | Schäumzeiten sec | min. Schüttdichte g·l⁻¹ |
|---|---|---|---|---|
| 1 | - | 5 | 15/20/28 | 16,4 |
| 2 | 0,1 Na-Polyacrylat | 5 | 15/18/27 | 15,8 |
| 3 | 0,1 EAS 1 | 11 | 13/18/25 | 15,8 |
| 4 | 0,05 EAS 1 | 9 | 13/19/24 | 16,0 |
| 5 | 0,1 EAS 2 | 12 | 13/17/23 | 15,6 |
| 6 | 0,05 EAS 2 | 10 | 13/18/25 | 15,9 |
| Die Beispiele 1 und 2 sind nicht erfind10ungsgemäß. c Das in Beispiel 2 eingesetzte Natriumsalz der Polyacrylsäure ist POLYSALZ S der BASF. EAS 1 ist ein Copolymerisat aus Ethylen und 5 % Acrylsäure mit einem Carboxylgruppengehalt von etwa 3 Gew. %. EAS 2 ist ein Copolymerisat aus Ethylen und 20 % Acrylsäure mit einem Carboxylgruppengehalt von etwa 12 %. | | | | |

## Patentansprüche

1. Verfahren zur Herstellung von perlförmigen expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren und unter Zusatz eines Treibmittels und 0,01 bis 1 Gew.% eines carboxylgruppenhaltige Polymerisats, dadurch gekennzeichnet, daß das carboxylgruppenhaltigen Polymerisat ein Polyolefin ist, welschen 1 bis 20 Gew.% Carboxylgruppen enthält.

2. Verfahren nach Anspruch 1, dadurch gekennzeichnet, daß das carboxylgruppenhaltige Polymerisat ein wachsartiges Copolymerisat aus Ethylen und Acrylsäure ist.
